# EUROPÄISCHE PATENTSCHRIFT

(11) **EP 4 021 654 B1**
(45) Veröffentlichungstag und Bekanntmachung des Hinweises auf die Patenterteilung: **01.05.2024**
(21) Anmeldenummer: 20764334.7
(22) Anmeldetag: 26.08.2020
(51) Int. Cl.: B07B 7/083, B07B 9/02, B04C 3/06, B01D 45/14

(54) **ZYKLON MIT ROTIERENDEM STABKORB**
CYCLONE WITH ROTATING ROD BASKET
CYCLONE À PANIER À BARRES ROTATIF

(30) Priorität: 28.08.2019 DE 102019123034
(43) Veröffentlichungstag der Anmeldung: 06.07.2022
(73) Patentinhaber: KHD Humboldt Wedag GmbH, 51149 Köln (DE)
(72) Erfinder: HACHENBERG, Niko, 51491 Overath NRW (DE)
(86) Internationale Anmeldenummer: PCT/EP2020/073789
(87) Internationale Veröffentlichungsnummer: WO 2021/037876

(56) Entgegenhaltungen:
- EP-A2- 0 297 386
- WO-A1-96/09120
- DE-A1- 1 507 706
- DE-A1-102014 015 550
- GB-A- 2 505 245
- US-A- 1 724 041
- US-A- 5 301 812

## Beschreibung

Die Erfindung betrifft einen Zyklon-Windsichter zum Trennen von in einem Fördergas suspendierten, körnigen Trenngut, aufweisend einen ersten, zylindrischen Hohlkörper mit einem in Bezug zur zylindrischen Form tangentialen bis spiralen Einlass für das das Trenngut tragende Fördergas, einen unter dem ersten, zylindrischen Hohlkörper befindlichen, zweiten, konischen Hohlkörper, welcher unmittelbar mit dem ersten, zylindrischen Hohlkörper verbunden ist, wobei die verjüngte Spitze des zweiten, konischen Hohlkörpers nach unten weist, mindestens ein durch die Konuswand des zweiten, konischen Hohlkörpers stoßendes Tauchrohr, welches innerhalb des zweiten, konischen Hohlkörpers nach oben ragt und dessen Öffnung im Volumen des ersten, zylindrischen Hohlkörpers angeordnet ist, wobei die nach unten weisende, verjüngte Spitze des zweiten, konischen Hohlkörpers mit einem Ausgang für Feingut verbunden ist.

Zum Trennen von körnigem Material ist es bekannt, das körnige Material in einem Luftstrom zu suspendieren und über unterschiedliche Arten von Windsichtern zu sichten oder zu klassieren. beim reinen Windsichten wird das Trägergas weitestgehend vom körnigen Gut befreit. Windsichter dieser Art sind bekannte Zyklonsichter, in welchem das in einem Gasstrom suspendierte Gut in einem Konus zu einem Wirbel gezwungen wird. In dem Wirbel trennt sich aufgrund der Zentrifugalkraft das körnige Gut von dem Trägergas.

In Klassieren ist es möglich, das Trenngut in unterschiedliche Körnungsfraktionen zu unterteilen. In einem Klassierer existiert in der Regel ein Gasstromeinlass, mindestens ein Auslass für das Trägergas und mindestens zwei Auslässe für die unterschiedlichen Kornfraktionen.

In einem Zyklonsichter taucht ein sog. Tauchrohr zentral in den erzwungenen Wirbel ein, dabei kann das Trägergas aufgrund der geringen Dichte mit Leichtigkeit über das Tauchrohr entströmen. Das dichtere, körnige Gut hingegen sammelt sich in der Konusspitze, wo es aus einem Auslauf herausfällt. Bei gattungsgemäßen Zyklonen taucht das Tauchrohr von oben mittig in den Wirbel ein.

Bei den unterschiedlichen Sichtertypen ist es stets das Ziel, mit möglichst geringem Druckverlust, damit möglichst geringer Verdichterleistung, einen größtmöglichen Trenneffekt herbeizuführen. In der Regel korreliert die Höhe des Druckverlustes mit der Trennleistung. Eine Möglichkeit, den Druckverlust zu verringern kann darin bestehen, den Durchmesser des Tauchrohrs möglichst groß zu dimensionieren-. Ist der Durchmesser des Tauchrohrs im Verhältnis zum Konus des Zyklons jedoch zu groß, so setzt sich der Wirbel im Tauchrohr fort und körniges Material wird mit dem Trägergas zusammen über das Tauchrohr aus dem Zyklonsichter ausgetragen.

In der deutschen Offenlegungsschrift DE 1 507 706 A, die einen Zyklon-Windsichter gemäß dem Oberbegriff des Anspruchs 1 offenbart, wird ein Streusichter mit Umluftgebläse offenbart. Dieser weist ein vertikalachsiges Gehäuse mit einem ringförmigen Sichtraum auf, wobei unmittelbar unter der Decke des Sichtraums ein Streuteller für das Einbringen des zu sichtenden Gutes angeordnet ist.

In der britischen Patentanmeldung GB 2 505 245 A wird ein zylindrischer Sichter offenbart, in dem ein Impeller mit Sichtgut beladenes Sichtgas von oben nach unten ringförmig einzieht. Das Sichtgas verlässt den Zylinder nach oben.

In der europäischen Patentanmeldung EP 0 297 386 A2 wird ein Hydrozyklon offenbart. Der Hydrozyklon weist in seinem Eintrittsbereich eine zentrale Rohtrommel auf, die mit ihrem den Schwerteilauslass zugewandten, offenen Ende des sich am konischen Teil hin zum zylindrischen Teil erstreckende Gutstoffrohr ein Stück überdeckt.

Aufgabe der Erfindung ist es, eine Vorrichtung zum Trennen von in einem Fördergas suspendierten, körnigen Trenngut zur Verfügung zu stellen, welche die Sichter effizient gegenüber bestehenden Lösungen erhöht. Die Effizienz misst sich dabei am Verhältnis der Trennleistung in Massen% des körnigen Gutes, das ausgesichtet wird, im Verhältnis zum Druckverlust über die Trennvorrichtung. Da der Druckverlust mit steigender Strömungsgeschwindigkeit zunimmt, die Trennleistung jedoch auch zunimmt, hat eine solche Trennvorrichtung in der Regel eine charakteristische Kennlinie, in der die Sichteffizient gegenüber dem Gasstrom aufgetragen ist.

Die erfindungsgemäße Aufgabe wird gelöst durch einen Zyklon-Windsichter mit den Merkmalen nach Anspruch 1. Weitere vorteilhafte Ausgestaltungen sind in den Unteransprüchen zu Anspruch 1 angegeben.

Nach dem Gedanken der Erfindung ist also vorgesehen, einen Stabkorbsichter mit einem Zyklonsichter zu verbinden. Bei der Integration von Zyklonsichter und Stabkorbsichter würden der in der Regel über Kopf liegende Antrieb des Stabkorbs mit dem von oben eintauchenden Tauchrohr kollidieren. Um diese Kollision zu vermeiden, ist hier vorgesehen, das Tauchrohr von unten durch die Wand des Konus des Zyklonsichters zu leiten, so dass das Tauchrohr wie ein stehendes Abflussrohr in den Zyklon hereinreicht. Diese Art des Aufbaus ermöglicht, dass das Tauchrohr einen größeren Durchmesser aufweisen kann als es bei gattungsgemäßen Zyklonsichtern der Fall ist. Damit sinkt der Druckunterschied bei gegebenem Gasstrom und damit auch die Sichtereffizienz. Bei der erfindungsgemäßen Integration eines Stabkorbsichters mit einem Zyklonsichter ist vorgesehen, dass das innere Volumen de Stabkorbsichters mit dem unter dem Stabkorb angeordneten Zyklonteil unmittelbar verbunden ist. Der rotierende Stabkorb erzwingt einen Zyklon, der in dem Konus des Zyklonsichters verstärkt wird. Dadurch, dass der Zyklon einen Anschub durch den Stabkorb erhält, ist es möglich, das Tauchrohr mit einem größeren Durchmesser zu versehen. In dem Sichter nach dem Erfindungsgedanken ist wie in einem Stabkorbsichter eine kreisförmige Förderrinne unterhalb des Stabkorbs angeordnet, in welches Grobgut fällt, das nicht den Weg durch die Stäbe des rotierenden Stabkorbs nehmen konnten. Diese Fraktion kann als Grobfraktion aus dem integrierten Sichter entnommen werden, in dem das Grobgut über einen Auslass herausrieselt. Im inneren Volumen des Stabkorbes rotiert das Trägergas etwa mit der Geschwindigkeit des Stabkorbes. Typische Geschwindigkeiten von Stabkörben betragen 60 m/s Umfangsgeschwindigkeit. bei einem Stabkorbdurchmesser von 1 m bis 2 m entspricht dies etwa 600 bis 1.200 U/min. Mit dieser Rotationsgeschwindigkeit strömt das Fördergas in den Zyklonteil des integrierten Sichters und hat dort eine Vorbeschleunigung erhalten, die sonst nur durch eine hohe Strömungsgeschwindigkeit durch ein enges Zuleitungsrohr erreicht werden kann, das tangential in den oberen Teil des Zyklons einbläst. Der durch den Stabkorb vorbeschleunigte Wirbel erzeugt eine Gasströmung, die innerhalb des Wirbels weitgehend partikelfrei ist. Dieser partikelfreie Teil des Wirbels kann durch ein von unten hochreichendes Tauchrohr abgeleitet werden. In dem peripheren Wirbelstrom reichert sich die Feinfraktion des körnigen Guts an, das über den Konus den Zyklonteil des integrierten Sichters verlässt.

In vorteilhafter und optimierter Ausgestaltung der Erfindung ist vorgesehen, dass sich der erste, zylindrischen Hohlkörper bis unterhalb des Stabkorbs erstreckt und unterhalb des Stabkorbs eine Höhe aufweist, die zwischen 50% und 150% der Höhe des zweiten, konischen Hohlkörpers entspricht. Das Höhenverhältnis des konischen und des zylindrischen teils des integrierten Sichters wirkt sich auf die Effizienz der Trennleistung aus. Ist der zylindrische Teil zu hoch, so kann sich der Wirbel im Zyklon wir ein Tornado zu einem Schlauchartigen Wirbel verjüngen und somit das Trägergas wie auch die Feinfraktion durch das Tauchrohr strömen lassen. Ist der Ist der zylindrische Teil zu flach, so kann es passieren, dass der vorbeschleunigte Wirbel in das Tauchrohr gezwungen wird und damit die Sichtereffizienz sinkt. Ziel der optimierten Ausführungsform ist es, den vorbeschleunigten Wirbel aufzuweiten, damit innerhalb des zentralen Wirbels ein Tauchrohr mit möglichst großem Durchmesser einstoßen kann. Für eine weitere Optimierung hat sich das Durchmesserverhältnis von Tauchrohr und Konusbreite als wichtiger Optimierungsparameter gezeigt. In besonders optimierter Ausgestaltung ist vorgesehen, dass der Durchmesser des Tauchrohres zwischen 20% und 60%, bevorzugt zwischen 30% und 50% des inneren Durchmessers des ersten, zylindrischen Hohlkörpers entspricht.

In der erfindungsgemäßen Trennvorrichtung ist des Weiteren vorgesehen, dass oberhalb der Öffnung des Tauchrohrs ein etwa konischer Körper angeordnet ist, dessen verjüngte Spitze nach oben weist, wobei auf der äußeren Oberfläche des etwa konischen Körpers spiralförmig geformte Leitbleche vorhanden sind, deren Windungssinn zu dem Drehsinn des Stabkorbs korrespondieren. Der konische Körper hat etwa die Funktion eines runden Spitzdaches, das wie ein Turmdach oberhalb der Spitze eines Turms angeordnet ist. Zwischen Turmspitze und Dachfirst befindet sich ein großzügiger Ringspalt, durch den das Fördergas in das Tauchrohr strömen kann. Der etwa konusförmige Körper mit den spiralförmigen Leitblechen unterstützt die Aufweitung des durch den Stabkorb erzwungenen Wirbels, wodurch sich die Trennleistung des integrierten Sichters erhöht. Um den Angriff des etwa konusförmigen Körpers auf den durch den Stabkorb erzwungenen Wirbel zu im seiner Wirkung zu optimieren, kann in vorteilhafter Ausgestaltung der Erfindung vorgesehen sein, dass der etwa konische Körper zum Beispiel durch Speichen innerhalb des ersten, zylindrischen Körpers gehalten ist, wobei die Speichen mit der Wand des ersten, zylindrischen Hohlkörpers verbunden sind, und wobei die Höhenposition des etwa konischen Körpers oberhalb des Tauchrohrs verstellbar ist, in dem die Position der Speichen in der Wand (W_{z}) des ersten, zylindrischen Hohlkörpers durch Langlöcher Höhenverstellbar ist. Durch die Höhenvariation kann je nach einmal gewählter Strömungsgeschwindigkeit des Trägergases der Ort des etwa konusförmigen Körpers optimiert werden, so dass eine maximale Aufweitung des Wirbels geschieht.

Der etwa konusförmige Körper dreht sich mit dem Stabkorb. Der sich mit Leitblechen bewehrte drehende Körper im Wirbel hilft dem durch den Stabkorb erzwungenem Wirbel zu noch mehr Rotationsenergie, wodurch die Rotationsgeschwindigkeit des Wirbels beim Aufweiten nicht zu stark verringert wird.

Anstelle des etwa konischen Körpers in dem Wirbel kann der Wirbel auch mit einem statischen, inversen Impeller aufgeweitet werden. Ein statischer inverser Impeller besteht aus ringförmig in Form eines Spiralteils angeordneten Leitblechen. Im Zentrum des inversen Impellers befindet sich kein Leitblech. Die durch die außen liegenden Leitbleche erzwungene Außenwirbelströmung hilft dem zentralen Wirbel, sich aufzuweiten.

Um die ideale Höhenposition des statischen, inversen Impellers einzustellen, kann vorgesehen sein, dass der etwa ringförmiger Körper mit der Wand des zylindrischen Körpers verbunden ist, wobei die Höhenposition des etwa ringförmigen Körpers oberhalb des Tauchrohrs durch Bolzen, die durch Langlöcher in der Wand des zylindrischen Körpers stoßen, verstellbar ist.

Die Erfindung wird anhand der folgenden Figuren näher erläutert. Es zeigt:
- Fig. 1: eine erste Variante eines erfindungsgemäßen Zyklons mit rotierendem Stabkorb,
- Fig. 2: eine zweite Variante eines erfindungsgemäßen Zyklons mit rotierendem Stabkorb,
- Fig. 3: eine dritte Variante eines erfindungsgemäßen Zyklons mit rotierendem Stabkorb,
- Fig. 4: eine durchbrochene Ansicht von oben auf die erste Variante nach Fig. 1,
- Fig. 5: eine durchbrochene Ansicht von oben auf die erste Variante nach Fig. 2,
- Fig. 6: ein rotierender Stabkorb mit Wirbel, wobei der Wirbel nicht durch Leitbleche aufgeweitet ist,
- Fig. 7: ein rotierender Stabkorb mit Wirbel, wobei der Wirbel durch Leitbleche gemäß der zweiten und dritten Varianten aus den Figuren Figur 2 und Figur 3 aufgeweitet ist,
- Fig. 8: ein rotierender Stabkorb mit Wirbel, wobei der Wirbel durch Leitbleche gemäß der ersten Variante Figur 1 aufgeweitet ist,

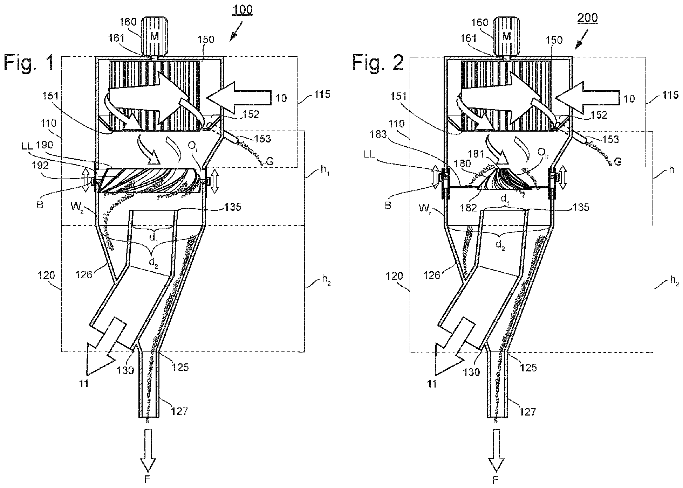

In **Figur 1** ist eine erste Variante eines erfindungsgemäßen Zyklons mit rotierendem Stabkorb 100 in einer durchbrochenen Ansicht von der Seite skizziert. Dieser Zyklon-Windsichter 100 zum Trennen von in einem Fördergas 10 suspendierten, körnigen Trenngut hat folgende Teilelemente: Zunächst einen ersten, zylindrischen Hohlkörper 110 mit einem in Bezug zur zylindrischen Form tangentialen bis spiralen Einlass 115 für das das Trenngut tragende Fördergas 10. In diesen tangentialen bis spiralen Einlass 115 strömt das Fördergas 10 und trifft dort in tangentialer Richtung spiraler Richtung auf einen Stabkorb 150. Der Stabkorb 150 wird durch einen Antrieb 160 über eine Antriebswelle 161 in Rotation versetzt. Unterhalb des ersten, zylindrischen Hohlkörpers 110 befindet sich ein zweiter, konischer Hohlkörper 120, welcher unmittelbar mit dem ersten, zylindrischen Hohlkörper 110 verbunden ist, wobei die verjüngte Spitze 125 des zweiten, konischen Hohlkörpers 120 nach unten weist. Durch die Konuswand 126 des zweiten, konischen Hohlkörpers 120 stößt ein Tauchrohr 130, welches innerhalb des zweiten, konischen Hohlkörpers 120 nach oben ragt und dessen Öffnung 135 im Volumen des ersten, zylindrischen Hohlkörpers 110 angeordnet ist. Die nach unten weisende, verjüngte Spitze 125 des zweiten, konischen Hohlkörpers 120 ist mit einem Ausgang 127 für Feingut F verbunden. Der im ersten, zylindrischen Hohlkörper 110 angeordneter rotierender Stabkorb 150 ist von einer am unteren Außenumfang 151 anliegenden, aber nicht berührenden, statischen und kreisförmigen Förderrinne 152 für Grobgut G umschlossen, wobei die Förderinne 152 für Grobgut G mit einem Ausgang 153 aus dem ersten, zylindrischen Hohlkörper 110 verbunden ist. Das durch den Stabkorb 150 umschlossene Volumen steht mit dem zweiten, konischen Hohlkörper 120 in Strömungsverbindung. Im Betrieb strömt das Fördergas 10 in den seitlichen tangentialen oder spiralen Einlass 115 und trifft dort vorbeschleunigt durch die Strömungsgeschwindigkeit in tangentialer oder spiraler Weise auf den rotierenden Stabkorb 150. Dabei ist der Drehsinn des rotierenden Stabkorbs so gewählt, dass die tangentiale bis spirale Anströmung dem Drehsinn entspricht. Bei der Umströmung des rotierenden Stabkorbs 150 strömt Fördergas und Feingut F durch die einzelnen Stäbe des rotierenden Stabkorbs 150 hindurch und gelangt so in das innere, vom Stabkorb 150 umschlossene Volumen. Grobgut G wird hingegen durch die Zentrifugalkraft nach außen geschleudert und gegebenenfalls durch die Stäbe des Stabkorbs 150 zurückgeworfen. Schwerkraftbedingt fällt das Grobgut G in die Förderinne 152 für Grobgut G und rollt oder rieselt dort zum Ausgang 153, wodurch das Grobgut den Zyklon mit rotierendem Stabkorb 150 verlässt. Das in dem von Stabkorb 150 umschlossenen Volumen befindliche Trägergas 10 mit Feingut F strömt mit einem durch den rotierenden Stabkorb150 versehenen Drehimpuls nach unten in den unteren Teil des ersten, zylindrischen Hohlkörpers 110.

Dort, im unteren Teil des ersten, zylindrischen Hohlkörpers 110, strömt in dieser ersten Variante des Zyklons mit rotierendem Stabkorb 150 das Trägergas 10 mit darin suspendiertem Feingut F an Leitblechen 192 vorbei, die wie Schaufeln eines inversen Impellers angeordnet sind. Diese Leitbleche 192 sind oberhalb der Öffnung 135 des Tauchrohrs 130 entlang eines etwa ringförmigen Körper 190 angeordnet und zwar auf der inneren Oberfläche Oi eines etwa ringförmigen Körpers 190. Dort sind die spiralförmig geformten Leitbleche 192 vorhanden, deren Windungssinn zu dem Drehsinn des Stabkorbs 150 korrespondieren. In dieser Variante ragen die spiralförmigen Leitbleche 192 von der Wand des ersten, zylindrischen Hohlkörpers 110 nach innen, lassen aber im Zentrum des ersten, zylindrischen Hohlkörpers 110 eine Öffnung frei, so dass die Leitbleche 192 wie Impellerschaufeln eines Impellers ohne zentralen Spinner angeordnet sind. Diese für den Wirbel aus Trägergas 10 und Feingut G außen liegenden Leitbleche 192 ermöglichen, dass sich der Wirbel aufweitet und mit einer Vorbeschleunigung in den zweite, konischen Hohlkörper 120 des Zyklons übergeht, wo der aufgeweitete Wirbel durch den Konus wieder verjüngt wird und durch die Beschleunigung bei der Verjüngung des Wirbels das Feingut F aus dem Wirbel herausschleudert. Das vom Feingut F befreite Trägergas 10 strömt sodann in die obere Öffnung 135 des Tauchrohrs 130, hingegen sammelt sich das Feingut F an der unteren verjüngten Spitze 125 des zweiten, konischen Hohlkörpers 120. und tritt dort schwerkraftbedingt aus dem Ausgang 127 heraus.

Für eine optimierte Form des Zyklons mit rotierendem Stabkorb 150 hat sich herausgestellt, dass eine solche Form gut arbeitet, bei der sich der erste, zylindrischen Hohlkörper 110 bis unterhalb des Stabkorbs 150 erstreckt und unterhalb des Stabkorbs 150 eine Höhe h₁ aufweist, die zwischen 50% und 150% der Höhe h₂ des zweiten, konischen Hohlkörpers 120 entspricht. Bei diesem Höhenverhältnis ist es möglich, dass der Durchmesser d₁ des Tauchrohres 130 zwischen 20% und 60%, bevorzugt zwischen 30% und 50% des inneren Durchmessers d₂ des ersten, zylindrischen Hohlkörpers 110 aufweist. Dieser für ein Tauchrohr recht große Durchmesser erlaubt einen Betrieb des Zyklons mit rotierendem Stabkorb 150, der einen vergleichsweise geringen Druckabfall erzeugt.

In **Figur 2** ist eine zweite Variante eines erfindungsgemäßen Zyklons mit rotierendem Stabkorb 200 in einer durchbrochenen Ansicht von der Seite skizziert. Dieser Zyklon-Windsichter 200 zum Trennen von in einem Fördergas 10 suspendierten, körnigen Trenngut hat folgende Teilelemente: Zunächst einen ersten, zylindrischen Hohlkörper 110 mit einem in Bezug zur zylindrischen Form tangentialen bis spiralen Einlass 115 für das das Trenngut tragende Fördergas 10. In diesen tangentialen bis spiralen Einlass 115 strömt das Fördergas 10 und trifft dort in tangentialer Richtung spiraler Richtung auf einen Stabkorb 150. Der Stabkorb 150 wird durch einen Antrieb 160 über eine Antriebswelle 161 in Rotation versetzt. Unterhalb des ersten, zylindrischen Hohlkörpers 110 befindet sich ein zweiter, konischer Hohlkörper 120, welcher unmittelbar mit dem ersten, zylindrischen Hohlkörper 110 verbunden ist, wobei die verjüngte Spitze 125 des zweiten, konischen Hohlkörpers 120 nach unten weist. Durch die Konuswand 126 des zweiten, konischen Hohlkörpers 120 stößt ein Tauchrohr 130, welches innerhalb des zweiten, konischen Hohlkörpers 120 nach oben ragt und dessen Öffnung 135 im Volumen des ersten, zylindrischen Hohlkörpers 110 angeordnet ist. Die nach unten weisende, verjüngte Spitze 125 des zweiten, konischen Hohlkörpers 120 ist mit einem Ausgang 127 für Feingut F verbunden. Der im ersten, zylindrischen Hohlkörper 110 angeordneter rotierende Stabkorb 150 ist von einer am unteren Außenumfang 151 anliegenden, aber nicht berührenden, statischen und kreisförmigen Förderrinne 152 für Grobgut G umschlossen, wobei die Förderinne 152 für Grobgut G mit einem Ausgang 153 aus dem ersten, zylindrischen Hohlkörper 110 verbunden ist. Das durch den Stabkorb 150 umschlossene Volumen steht mit dem zweiten, konischen Hohlkörper 120 in Strömungsverbindung. Im Betrieb strömt das Fördergas 10 in den seitlichen tangentialen oder spiralen Einlass 115 und trifft dort vorbeschleunigt durch die Strömungsgeschwindigkeit in tangentialer oder spiraler Weise auf den rotierenden Stabkorb 150. Dabei ist der Drehsinn des rotierenden Stabkorbs so gewählt, dass die tangentiale bis spirale Anströmung dem Drehsinn entspricht. Bei der Umströmung des rotierenden Stabkorbs 150 strömt Fördergas und Feingut F durch die einzelnen Stäbe des rotierenden Stabkorbs 150 hindurch und gelangt so in das innere, vom Stabkorb 150 umschlossene Volumen. Grobgut G wird hingegen durch die Zentrifugalkraft nach außen geschleudert und gegebenenfalls durch die Stäbe des Stabkorbs 150 zurückgeworfen. Schwerkraftbedingt fällt das Grobgut G in die Förderinne 152 für Grobgut G und rollt oder rieselt dort zum Ausgang 153, wodurch das Grobgut den Zyklon mit rotierendem Stabkorb 150 verlässt. Das in dem von Stabkorb 150 umschlossenen Volumen befindliche Trägergas 10 mit Feingut F strömt mit einem durch den rotierenden Stabkorb150 versehenen Drehimpuls nach unten in den unteren Teil des ersten, zylindrischen Hohlkörpers 110.

Dort, im unteren Teil des ersten, zylindrischen Hohlkörpers 110, strömt in dieser ersten Variante des Zyklons mit rotierendem Stabkorb 150 das Trägergas 10 mit darin suspendiertem Feingut F an einem etwa konischen Körper 180 vorbei und wird durch diesen aufgeweitet. Der etwa konische Körper 180 ist dabei oberhalb der Öffnung 135 des Tauchrohrs 130 angeordnet, wobei dessen verjüngte Spitze 181 nach oben weist, und wobei auf der äußeren Oberfläche Oₖ des etwa konischen Körpers 180 spiralförmig geformte Leitbleche 182 vorhanden sind, deren Windungssinn zu dem Drehsinn des Stabkorbs 150 korrespondieren. Wie ein rundes Spitzdach eines Turms stößt der etwa konische Körper 180 in den aus dem Stabkorb 150 nach unten strömendem Wirbel und weitet diesen auf, wobei die Leitbleche 182 die Aufweitung des Wirbels unter Beibehaltung einer Wirbelströmung unterstützen. Um den optimalen Aufweitungspunkt zu finden, ist in dieser Ausführungsform vorgesehen, dass der etwa konische Körper 180 durch Speichen 183 innerhalb des ersten, zylindrischen Körpers 110 gehalten ist. Diese Speichen 183 sind mit der Wand W_{z} des ersten, zylindrischen Hohlkörpers 110 verbunden, wobei die Höhenposition des etwa konischen Körpers 180 oberhalb des Tauchrohrs 130 verstellbar ist, in dem die Position der Speichen 183 in der Wand W_{z} des ersten, zylindrischen Hohlkörpers 110 durch Langlöcher LL Höhenverstellbar sind.

Das durch den aufgeweiteten Wirbel in den zweiten, unteren konischen Hohlkörper 120 strömende Feingut sammelt sich im Konus des Zyklons und fällt an der unteren verjüngten Spitze am Ausgang 127 aus dem Zyklon heraus. Das vom Feingut befreite Trägergas hingegen strömt durch die Öffnung 135 in dem Tauchrohr 130 aus dem Zyklon heraus.

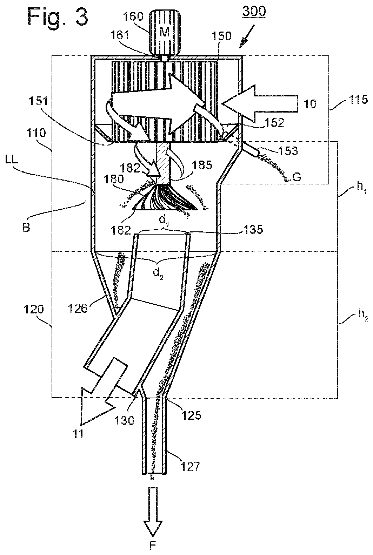

In **Figur 3** ist eine dritte Variante eines erfindungsgemäßen Zyklons mit rotierendem Stabkorb 300 in einer durchbrochenen Ansicht von der Seite skizziert. Dieser Zyklon-Windsichter 300 zum Trennen von in einem Fördergas 10 suspendierten, körnigen Trenngut hat folgende Teilelemente: Zunächst einen ersten, zylindrischen Hohlkörper 110 mit einem in Bezug zur zylindrischen Form tangentialen bis spiralen Einlass 115 für das das Trenngut tragende Fördergas 10. In diesen tangentialen bis spiralen Einlass 115 strömt das Fördergas 10 und trifft dort in tangentialer Richtung spiraler Richtung auf einen Stabkorb 150. Der Stabkorb 150 wird durch einen Antrieb 160 über eine Antriebswelle 161 in Rotation versetzt. Unterhalb des ersten, zylindrischen Hohlkörpers 110 befindet sich ein zweiter, konischer Hohlkörper 120, welcher unmittelbar mit dem ersten, zylindrischen Hohlkörper 110 verbunden ist, wobei die verjüngte Spitze 125 des zweiten, konischen Hohlkörpers 120 nach unten weist. Durch die Konuswand 126 des zweiten, konischen Hohlkörpers 120 stößt ein Tauchrohr 130, welches innerhalb des zweiten, konischen Hohlkörpers 120 nach oben ragt und dessen Öffnung 135 im Volumen des ersten, zylindrischen Hohlkörpers 110 angeordnet ist. Die nach unten weisende, verjüngte Spitze 125 des zweiten, konischen Hohlkörpers 120 ist mit einem Ausgang 127 für Feingut F verbunden. Der im ersten, zylindrischen Hohlkörper 110 angeordneter rotierende Stabkorb 150 ist von einer am unteren Außenumfang 151 anliegenden, aber nicht berührenden, statischen und kreisförmigen Förderrinne 152 für Grobgut G umschlossen, wobei die Förderinne 152 für Grobgut G mit einem Ausgang 153 aus dem ersten, zylindrischen Hohlkörper 110 verbunden ist. Das durch den Stabkorb 150 umschlossene Volumen steht mit dem zweiten, konischen Hohlkörper 120 in Strömungsverbindung. Im Betrieb strömt das Fördergas 10 in den seitlichen tangentialen oder spiralen Einlass 115 und trifft dort vorbeschleunigt durch die Strömungsgeschwindigkeit in tangentialer oder spiraler Weise auf den rotierenden Stabkorb 150. Dabei ist der Drehsinn des rotierenden Stabkorbs so gewählt, dass die tangentiale bis spirale Anströmung dem Drehsinn entspricht. Bei der Umströmung des rotierenden Stabkorbs 150 strömt Fördergas und Feingut F durch die einzelnen Stäbe des rotierenden Stabkorbs 150 hindurch und gelangt so in das innere, vom Stabkorb 150 umschlossene Volumen. Grobgut G wird hingegen durch die Zentrifugalkraft nach außen geschleudert und gegebenenfalls durch die Stäbe des Stabkorbs 150 zurückgeworfen. Schwerkraftbedingt fällt das Grobgut G in die Förderinne 152 für Grobgut G und rollt oder rieselt dort zum Ausgang 153, wodurch das Grobgut den Zyklon mit rotierendem Stabkorb 150 verlässt. Das in dem von Stabkorb 150 umschlossenen Volumen befindliche Trägergas 10 mit Feingut F strömt mit einem durch den rotierenden Stabkorb150 versehenen Drehimpuls nach unten in den unteren Teil des ersten, zylindrischen Hohlkörpers 110.

Dort, im unteren Teil des ersten, zylindrischen Hohlkörpers 110, strömt in dieser ersten Variante des Zyklons mit rotierendem Stabkorb 150 das Trägergas 10 mit darin suspendiertem Feingut F an einem etwa konischen Körper 180 vorbei und wird durch diesen aufgeweitet. Der etwa konische Körper 180 ist dabei oberhalb der Öffnung 135 des Tauchrohrs 130 angeordnet, wobei dessen verjüngte Spitze 181 nach oben weist, und wobei auf der äußeren Oberfläche Oₖ des etwa konischen Körpers 180 spiralförmig geformte Leitbleche 182 vorhanden sind, deren Windungssinn zu dem Drehsinn des Stabkorbs 150 korrespondieren. Besonders an dieser Variante ist, dass der etwa konische Körper 180 über eine Welle 185 mit dem Stabkorb 180 verbunden ist und sich mit dem Stabkorb 150 mit dreht. Durch das Mitdrehen fügt der etwa konische Körper 180 dem aus dem Stabkorb 150 strömenden Wirbel bei der Aufweitung dem Wirbel noch einen Drehimplus hinzu, so dass der Drehimpuls des Wirbels bim Aufweiten nicht zu stark gebremst wird.

Auch in dieser Variante ist es so, dass der etwa konische Körper 180, der sich mit dem Stabkorb 150 mit dreht, wie ein rundes Spitzdach eines Turms in den aus dem Stabkorb 150 nach unten strömendem Wirbel stößt und diesen aufweitet, wobei die Leitbleche 182 die Aufweitung des Wirbels unter Beibehaltung einer Wirbelströmung unterstützen. Das durch den aufgeweiteten Wirbel in den zweiten, unteren konischen Hohlkörper 120 strömende Feingut sammelt sich im Konus des Zyklons und fällt an der unteren verjüngten Spitze am Ausgang 127 aus dem Zyklon heraus. Das vom Feingut befreite Trägergas hingegen strömt durch die Öffnung 135 in dem Tauchrohr 130 aus dem Zyklon heraus.

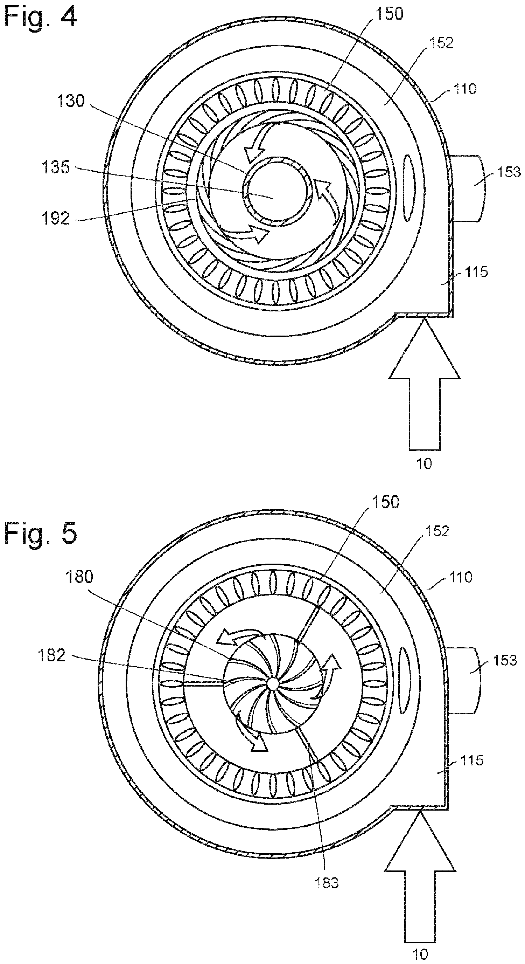

In **Figur 4** ist ein Blick von oben in den oben durchbrochenen Zyklon nach Figur 1 mit Stabkorb 150 skizziert. Fördergas 10 mit darin suspendiertem Feingut F tritt in den tangentialen bis spiralen Einlass 115 in den ersten, zylindrischen Hohlkörper 110 ein. Dort umrundet es zunächst den rotierenden Stabkorb 150, wobei die Drehsinne des Stabkorbs 150 und des einströmenden Trägergases 10 einander entsprechen. Nach Passage des rotierenden Stabkorbes 150 strömt das Trägergas in das innere, vom Stabkorb 150 umschlossene Volumen und trifft dort auf die Leitbleche 192, die wie ein inverser Impeller aufgebaut sind, also wie Leitbleche als Impellerflüger, die von außen nach innen ragen und im Zentrum einen freuen Durchgang lassen. In Figur 1 sind Pfeile eingezeichnet, die den Wirbel repräsentieren sollen, die aus dem Stabkorb 150 nach unten, hier etwa in das Zentrum der Skizze strömen. In der Mitte der Skizze ist die Öffnung 135 des Tauchrohres gezeugt, durch den das von Feingut F befreite Trägergas 10 strömt.

In **Figur 5** ist ein Blick von oben in den oben durchbrochenen Zyklon nach Figur 2 mit Stabkorb 150 skizziert. Fördergas 10 mit darin suspendiertem Feingut F tritt in den tangentialen bis spiralen Einlass 115 in den ersten, zylindrischen Hohlkörper 110 ein. Dort umrundet es zunächst den rotierenden Stabkorb 150, wobei die Drehsinne des Stabkorbs 150 und des einströmenden Trägergases 10 einander entsprechen. Nach Passage des rotierenden Stabkorbes 150 strömt das Trägergas in das innere, vom Stabkorb 150 umschlossene Volumen und trifft dort auf die Leitbleche 182 eines etwa konischen Körpers, der in den nach unten strömenden Wirbel (hier in das Zentrum der Skizze) stößt und den Wirbel mit den auf der Dachfläche des etwa konischen Körpers 180 befindlichen Leitblechen 182 aufweitet. Dabei wirkt der etwa konische Körper 180 wie eine Dachfläche über der hier verdeckten Öffnung 135 des Tauchrohrs 130.

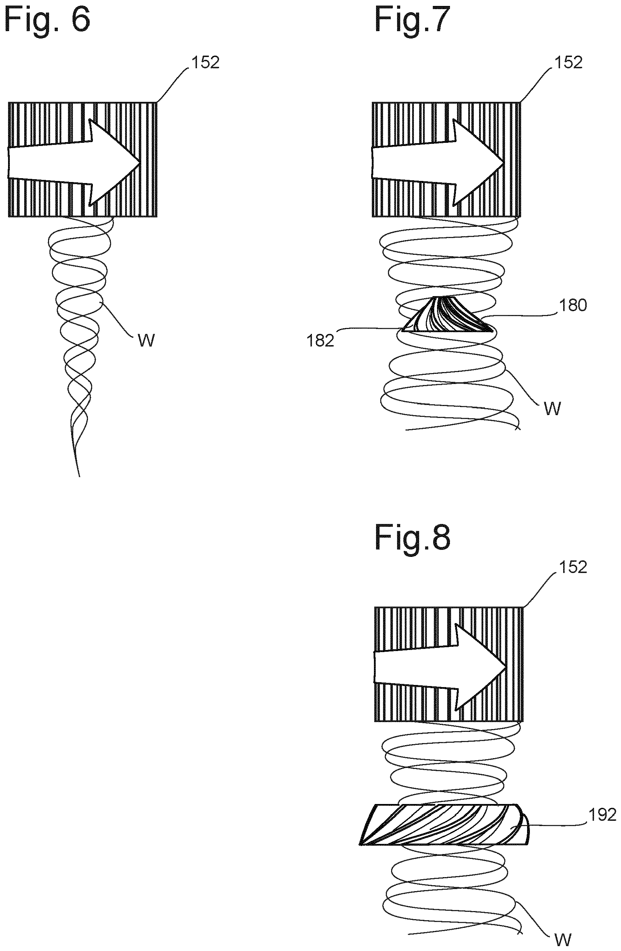

In **Figur 6** ist ein rotierender Stabkorb 150 mit einem aus dem Stabkorb 150 nach unten strömenden Wirbel W dargestellt, wobei der Wirbel W nicht durch Leitbleche oder andere die Strömung kontrollierende Maßnahmen aufgeweitet ist. Ohne eine Leitblechanordnung würde der Wirbel W wie ein Tornado nach unten strömen und sich dabei verjüngen und unmittelbar aus dem Stabkorb in die Öffnung eines unter dem Stabkorb150 befindliches Tauchrohr, das hier nicht gezeichnet ist, strömen.

In **Figur 7** ist ein rotierender Stabkorb 150 mit einem aus dem Stabkorb 150 nach unten strömenden Wirbel W dargestellt, wobei der Wirbel W in dieser Darstellung durch Leitbleche 182 eines etwa konischen Körpers 180 gemäß den Varianten in Figur 2 und Figur 3 aufgeweitet ist. Der sich aufgeweitete Wirbel W lässt einem Tauchrohr, das hier nicht gezeichnet ist, mit relativ großem Durchmesser freien Raum ohne dass der Wirbel W unmittelbar in ein unter dem Stabkorb 150 befindliches Tauchrohr strömen würde.

In **Figur** 8 ist ein rotierender Stabkorb 150 mit einem aus dem Stabkorb 150 nach unten strömenden Wirbel W dargestellt, wobei der Wirbel W in dieser Darstellung durch Leitbleche 192 gemäß der Variante in Figur 1 aufgeweitet ist. Der sich aufgeweitete Wirbel W lässt einem Tauchrohr, das hier nicht gezeichnet ist, mit relativ großem Durchmesser freien Raum ohne dass der Wirbel W unmittelbar in ein unter dem Stabkorb 150 befindliches Tauchrohr strömen würde.

### BEZUGSZEICHENLISTE

| | | | |
|---|---|---|---|
| 10 | Fördergas | 183 | Speiche |
| 11 | Abluft | 185 | Welle |
| 100 | Windsichter | 190 | etwa ringförmiger Körper |
| 110 | zylindrischer Hohlkörper | 192 | Leitblech |
| 115 | Einlass | 200 | Windsichter |
| 120 | konischer Hohlkörper | 300 | Windsichter |
| 125 | verjüngte Spitze | | |
| 126 | Konuswand | B | Bolzen |
| 127 | Ausgang | d₁ | Durchmesser |
| 130 | Tauchrohr | d₂ | Durchmesser |
| 135 | Öffnung | F | Feingut |
| 150 | Stabkorb | G | Grobgut |
| 151 | unterer Außenumfang | h₁ | Höhe |
| 152 | Förderrinne | h₂ | Höhe |
| 153 | Ausgang | LL | Langloch |
| 160 | Antrieb | Oₖ | äußere Oberfläche |
| 161 | Antriebswelle | Oᵢ | innere Oberfläche |
| 180 | etwa konischer Körper | O_{z} | Oberfläche |
| 181 | verjüngte Spitze | W | Wirbel |
| 182 | Leitblech | W_{z} | Wand |

## Patentansprüche

1. Zyklon-Windsichter (100, 200, 300) zum Trennen von in einem Fördergas (10) suspendierten, körnigen Trenngut, aufweisend
- einen ersten, zylindrischen Hohlkörper (110) mit einem in Bezug zur zylindrischen Form tangentialen bis spiralen Einlass (115) für das das Trenngut tragende Fördergas (10),
- einen unter dem ersten, zylindrischen Hohlkörper (110) befindlichen, zweiten, konischen Hohlkörper (120), welcher unmittelbar mit dem ersten, zylindrischen Hohlkörper (110) verbunden ist, wobei die verjüngte Spitze (125) des zweiten, konischen Hohlkörpers (120) nach unten weist,
- mindestens ein durch die Konuswand (126) des zweiten, konischen Hohlkörpers (120) stoßendes Tauchrohr (130), welches innerhalb des zweiten, konischen Hohlkörpers (120) nach oben ragt und dessen Öffnung (135) im Volumen des ersten, zylindrischen Hohlkörpers (110) angeordnet ist, wobei
- die nach unten weisende, verjüngte Spitze (125) des zweiten, konischen Hohlkörpers (120) mit einem Ausgang (127) für Feingut (F) verbunden ist, wobei im ersten, zylindrischen Hohlkörper (110) ein rotierender Stabkorb (150) angeordnet ist, der
- von einer am unteren Außenumfang (151) anliegenden, aber nicht berührenden, statischen und kreisförmigen Förderrinne (152) für Grobgut (G) umschlossen ist, wobei die Förderinne (152) für Grobgut (G) mit einem Ausgang (153) aus dem ersten, zylindrischen Hohlkörper (110) verbunden ist, und
- das durch den Stabkorb (150) umschlossene Volumen mit dem zweiten, konischen Hohlkörper (120) in Strömungsverbindung steht, **dadurch gekennzeichnet, dass**
oberhalb der Öffnung (135) des Tauchrohrs (130) eine etwa konischer Körper (180) angeordnet ist, dessen verjüngte Spitze (181) nach oben weist, wobei auf der äußeren Oberfläche (Oₖ) des etwa konischen Körpers (180) spiralförmig geformte Leitbleche (182) vorhanden sind, deren Windungssinn zu dem Drehsinn des Stabkorbs (150) korrespondieren, und
wobei
der etwa konische Körper (180) über eine Welle (185) mit dem Stabkorb (180) verbunden ist und sich mit dem Stabkorb (150) mit dreht.

2. Zyklon-Windsichter nach Anspruch 1,
**dadurch gekennzeichnet, dass**
sich der erste, zylindrischen Hohlkörper (110) bis unterhalb des Stabkorbs (150) erstreckt und unterhalb des Stabkorbs (150) eine Höhe (h₁) aufweist, die zwischen 50% und 150% der Höhe (h₂) des zweiten, konischen Hohlkörpers (120) entspricht.

3. Zyklon-Windsichter nach Anspruch 1 oder 2,
**dadurch gekennzeichnet, dass**
der Durchmesser (d₁) des Tauchrohres (130) zwischen 20% und 60%, bevorzugt zwischen 30% und 50% des inneren Durchmessers (d₂) des ersten, zylindrischen Hohlkörpers (110) entspricht.

4. Zyklon-Windsichter nach einem der Ansprüche 1 bis 3,
**dadurch gekennzeichnet, dass**
der Stabkorb (150) einen Antrieb (160) aufweist, dessen Antriebswelle (161) von oben in den ersten, zylindrischen Hohlkörper (110) hineintragt.

5. Zyklon-Windsichter nach einem der Ansprüche 1 bis 4,
**dadurch gekennzeichnet, dass**
der etwa konische Körper (180) durch Speichen (183) innerhalb des ersten, zylindrischen Körpers (110) gehalten ist, wobei die Speichen (183) mit der Wand (W_{z}) des ersten, zylindrischen Hohlkörpers (110) verbunden sind, und wobei die Höhenposition des etwa konischen Körpers (180) oberhalb des Tauchrohrs (130) verstellbar ist, in dem die Position der Speichen (183) in der Wand (W_{z}) des ersten, zylindrischen Hohlkörpers (110) durch Langlöcher (LL) Höhenverstellbar ist.

6. Zyklon-Windsichter nach einem der Ansprüche 1 bis 4,
**dadurch gekennzeichnet, dass**
oberhalb der Öffnung (135) des Tauchrohrs (130) ein etwa ringförmiger Körper (190) angeordnet ist, wobei auf der inneren Oberfläche (Oi) des etwa ringförmigen Körpers (190) spiralförmig geformte Leitbleche (192) vorhanden sind, deren Windungssinn zu dem Drehsinn des Stabkorbs (150) korrespondieren.

7. Zyklon-Windsichter nach Anspruch 6,
**dadurch gekennzeichnet, dass**
der etwa ringförmiger Körper (190) mit der Wand (W_{z}) des zylindrischen Körpers verbunden ist, wobei die Höhenposition des etwa ringförmigen Körpers (190) oberhalb des Tauchrohrs (130) durch Bolzen (B), die durch Langlöcher (LL) in der Wand (W_{z}) des zylindrischen Körpers (110) stoßen, verstellbar ist.

## Claims

1. Cyclone air separator (100, 200, 300) for separating granular material which is to be separated and which is suspended in a conveying gas (10), having
- a first, cylindrical hollow member (110) which has a tangential to helical inlet (115) with respect to the cylindrical form for the conveying gas (10) which carries the material to be separated,
- a second, conical hollow member (120) which is located under the first, cylindrical hollow member (110) and which is connected directly to the first, cylindrical hollow member (110), wherein the tapered tip (125) of the second, conical hollow member (120) is directed downwards,
- at least one immersion pipe (130) which extends through the conical wall (126) of the second, conical hollow member (120), which projects upwards inside the second, conical hollow member (120), and the opening (135) of which is arranged in the volume of the first, cylindrical hollow member (110), wherein
- the downwardly directed, tapered tip (125) of the second, conical hollow member (120) is connected to an outlet (127) for fine material (F),
wherein
a rotating rod basket (150) is arranged in the first, cylindrical hollow member (110), which rotating rod basket
- is surrounded by a static and circular conveying channel (152) for coarse material (G), which conveying channel abuts but does not make contact with the lower external circumference (151), wherein the conveying channel (152) for coarse material (G) is connected to an outlet (153) out of the first, cylindrical hollow member (110), and
- the volume which is surrounded by the rod basket (150) is connected in terms of flow to the second, conical hollow member (120),
**characterized in that**
a substantially conical member (180), whose tapered tip (181) is directed upwards, is arranged above the opening (135) of the immersion pipe (130), wherein helically formed guiding plates (182) whose winding direction corresponds to the rotation direction of the rod basket (150) are provided on the external surface (Oₖ) of the substantially conical member (180), and
wherein
the substantially conical member (180) is connected to the rod basket (180) via a shaft (185) and conjointly rotates with the rod basket (150).

2. Cyclone air separator according to Claim 1,
**characterized in that**
the first, cylindrical hollow member (110) extends as far as a location under the rod basket (150) and, under the rod basket (150), has a height (h₁) which corresponds to between 50% and 150% of the height (h₂) of the second, conical hollow member (120).

3. Cyclone air separator according to Claim 1 or 2, **characterized in that**
the diameter (d₁) of the immersion pipe (130) corresponds to between 20% and 60%, preferably between 30% and 50% of the internal diameter (d₂) of the first, cylindrical hollow member (110).

4. Cyclone air separator according to one of Claims 1 to 3,
**characterized in that**
the rod basket (150) has a drive (160), the drive shaft (161) of which projects from above into the first, cylindrical hollow member (110).

5. Cyclone air separator according to one of Claims 1 to 4,
**characterized in that**
the substantially conical member (180) is retained by spokes (183) inside the first, cylindrical member (110), wherein the spokes (183) are connected to the wall (W_{z}) of the first, cylindrical hollow member (110), and wherein the vertical position of the substantially conical member (180) is adjustable above the immersion pipe (130), in which the position of the spokes (183) in the wall (W_{z}) of the first, cylindrical hollow member (110) is vertically adjustable by elongate holes (LL).

6. Cyclone air separator according to one of Claims 1 to 4,
**characterized in that**
a substantially annular member (190) is arranged above the opening (135) of the immersion pipe (130), wherein helically formed guiding plates (192) whose winding direction corresponds to the rotation direction of the rod basket (150) are provided on the internal surface (Oi) of the substantially annular member (190).

7. Cyclone air separator according to Claim 6,
**characterized in that**
the substantially annular member (190) is connected to the wall (W_{z}) of the cylindrical member, wherein the vertical position of the substantially annular member (190) above the immersion pipe (130) can be adjusted by means of bolts (B) which extend through elongate holes (LL) in the wall (W_{z}) of the cylindrical member (110).

## Revendications

1. Séparateur pneumatique à cyclone (100, 200, 300) pour séparer des matières à séparer granuleuses en suspension dans un gaz de transport (10), présentant
- un premier corps creux cylindrique (110) avec une entrée (115) tangentielle à spiralée par rapport à la forme cylindrique pour le gaz de transport (10) portant les matières à séparer,
- un deuxième corps creux conique (120) se trouvant sous le premier corps creux cylindrique (110), qui est directement relié au premier corps creux cylindrique (110), la pointe effilée (125) du deuxième corps creux conique (120) étant orientée vers le bas,
- au moins un tube plongeur (130) traversant la paroi conique (126) du deuxième corps creux conique (120), qui fait saillie vers le haut à l'intérieur du deuxième corps creux conique (120) et dont l'ouverture (135) est agencée dans le volume du premier corps creux cylindrique (110),
- la pointe effilée (125) du deuxième corps creux conique (120), orientée vers le bas, étant reliée à une sortie (127) pour les matières fines (F),
dans le premier corps creux cylindrique (110) étant agencé un panier à barres rotatif (150) qui
- est entouré d'une goulotte de transport (152) statique et circulaire pour les matières grossières (G), qui s'applique contre la périphérie extérieure inférieure (151) mais ne la touche pas, la goulotte de transport (152) pour les matières grossières (G) étant reliée à une sortie (153) du premier corps creux cylindrique (110), et
- le volume entouré par le panier à barres (150) étant en liaison d'écoulement avec le deuxième corps creux cylindrique (110),
**caractérisé en ce que**
au-dessus de l'ouverture (135) du tube plongeur (130), est agencé un corps approximativement conique (180) dont la pointe effilée (181) est orientée vers le haut, des tôles déflectrices (182) en forme de spirale étant présentes sur la surface extérieure (Oₖ) du corps approximativement conique (180), dont le sens d'enroulement correspond au sens de rotation du panier à barres (150), et
le corps approximativement conique (180) étant relié au panier de barres (180) par le biais d'un arbre (185) et tournant avec le panier de barres (150).

2. Séparateur pneumatique à cyclone selon la revendication 1, **caractérisé en ce que** le premier corps creux cylindrique (110) s'étend jusqu'en dessous du panier de barres (150) et présente, en dessous du panier de barres (150), une hauteur (h₁) qui correspond à entre 50 % et 150 % de la hauteur (h₂) du deuxième corps creux conique (120).

3. Séparateur pneumatique à cyclone selon la revendication 1 ou 2, **caractérisé en ce que** le diamètre (d₁) du tube plongeur (130) correspond à entre 20 % et 60 %, de préférence entre 30 % et 50 % du diamètre intérieur (d₂) du premier corps cylindrique creux (110).

4. Séparateur pneumatique à cyclone selon l'une quelconque des revendications 1 à 3, **caractérisé en ce que** le panier à barres (150) présente un entraînement (160) dont l'arbre d'entraînement (161) pénètre par le haut dans le premier corps creux cylindrique (110).

5. Séparateur pneumatique à cyclone selon l'une quelconque des revendications 1 à 4, **caractérisé en ce que** le corps approximativement conique (180) est maintenu par des rayons (183) à l'intérieur du premier corps cylindrique (110), les rayons (183) étant reliés à la paroi (W_{z}) du premier corps cylindrique creux (110), et la position en hauteur du corps approximativement conique (180) étant réglable au-dessus du tube plongeur (130) par le fait que la position des rayons (183) dans la paroi (W_{z}) du premier corps cylindrique creux (110) est réglable en hauteur par des trous oblongs (LL).

6. Séparateur pneumatique à cyclone selon l'une quelconque des revendications 1 à 4, **caractérisé en ce qu'**un corps approximativement annulaire (190) est agencé au-dessus de l'ouverture (135) du tube plongeur (130), des tôles déflectrices (192) en forme de spirale étant présentes sur la surface intérieure (Oi) du corps approximativement annulaire (190), dont le sens d'enroulement correspond au sens de rotation du panier de barres (150).

7. Séparateur pneumatique à cyclone selon la revendication 6, **caractérisé en ce que** le corps approximativement annulaire (190) est relié à la paroi (W_{z}) du corps cylindrique, la position en hauteur du corps approximativement annulaire (190) au-dessus du tube plongeur (130) étant réglable au moyen de boulons (B) qui passent à travers des trous oblongs (LL) dans la paroi (W_{z}) du corps cylindrique (110).
